# EUROPÄISCHE PATENTSCHRIFT

(11) **EP 2 801 145 B1**
(45) Veröffentlichungstag und Bekanntmachung des Hinweises auf die Patenterteilung: **01.08.2018**
(21) Anmeldenummer: 12787409.7
(22) Anmeldetag: 05.11.2012
(51) Int. Cl.: H02M 1/32

(54) **VERFAHREN UND VORRICHTUNG ZUR ÜBERWACHUNG EINES UMRICHTERS**
METHOD AND DEVICE FOR MONITORING A CONVERTER
PROCÉDÉ ET DISPOSITIF DE SURVEILLANCE D'UN CONVERTISSEUR DE TENSION

(30) Priorität: 04.01.2012 DE 102012200067
(43) Veröffentlichungstag der Anmeldung: 12.11.2014
(73) Patentinhaber: Robert Bosch GmbH, 70442 Stuttgart (DE)
(72) Erfinder: HAEFFNER, Juergen, 71116 Gaertringen (DE); GARCEA, Domenic, 70193 Stuttgart (DE); GEIGER, Albert, 71735 Eberdingen (DE)
(86) Internationale Anmeldenummer: PCT/EP2012/071803
(87) Internationale Veröffentlichungsnummer: WO 2013/102505

(56) Entgegenhaltungen:
- JP-A- 2008 199 747
- US-A1- 2009 207 542
- US-A1- 2010 019 737
- KRSTIC S ET AL: "Circuit Breaker Technologies for Advanced Ship Power Systems", 1. Mai 2007 (2007-05-01), ELECTRIC SHIP TECHNOLOGIES SYMPOSIUM, 2007. ESTS '07. IEEE, IEEE, PI, PAGE(S) 201 - 208, XP031177065, ISBN: 978-1-4244-0946-4 Abbildung 8

## Beschreibung

### Technisches Gebiet

Die vorliegende Erfindung betrifft Umrichter, insbesondere DC/DC-Wandler zum Einsatz in einem Kraftfahrzeug, sowie Maßnahmen zur Erkennung eines Fehlerstroms.

### Stand der Technik

Umrichter weisen in der Regel eine Reihe von Halbleiterbauelementen auf, mit denen, gesteuert durch eine geeignete Steuereinheit, eine eingangsseitig anliegende Gleich- oder Wechselspannung eines ersten Netzes in eine ausgangsseitig bereitgestellte Gleich- oder Wechselspannung eines zweiten Netzes gewandelt werden kann. Beispielsweise kann ein DC/DC-Umrichter mehrere Halbbrückenschaltungen aufweisen, die eingangsseitig und ausgangsseitig parallel zueinander geschaltet sind.

Weiterhin können zum Glätten des Eingangsstroms und der Ausgangsspannung Eingangs- und Ausgangskapazitäten bzw. Zwischenkreiskapazitäten vorgesehen sein.

In Umrichtern können Fehlerströme auftreten. Beispielsweise können die Fehlerströme durch eine Verringerung des Isolationswiderstands der Eingangs- und Ausgangskapazitäten hervorgerufen werden. Dies kann insbesondere bei der Verwendung von Keramikkondensatoren (MLCC-Kondensatoren: Multi-layer Ceramic Capacitors) auftreten, die eine vergleichsweise hohe Empfindlichkeit gegenüber mechanischen Belastungen aufweisen. Weiterhin kann ein Fehlerstrom durch fehlerhafte Halbleiterschalter entstehen, wenn diese einen erhöhten Sperrstrom im gesperrten Zustand aufweisen.

Insbesondere bei der Verwendung des Umrichters als DC/DC-Umrichter wird für die durch den DC/DC-Umrichter verbundenen Gleichspannungsnetze ein gemeinsames Massepotential vorgesehen. Zum Erkennen eines Fehlerstroms in dem DC/DC-Wandler kann daher, wie bereits aus der Druckschrift DE 10 2008 041 341 A1 bekannt, ein Fehlerstromdetektor zwischen der Wandlerschaltung des Umrichters und dem gemeinsamen Massepotential vorgesehen sein. Vor dem Aktivieren des Umrichters wird überprüft, ob ein Fehlerstrom zwischen der Wandlerschaltung des Umrichters und dem Massepotential vorliegt, bevor eine niederohmige Verbindung zwischen der Wandlerschaltung des Umrichters und dem Massepotential hergestellt wird.

Eine solche Anordnung hat den Nachteil, dass zwischen der Wandlerschaltung des Umrichters und dem Massepotential ein Knoten entsteht, der vor einer Aktivierung des Umrichters ein schwebendes Potential aufweist. Dies kann zu unerwünschten Spannungspotentialen führen. Weiterhin können durch den erhöhten Widerstand zum Massepotential Gleichtaktstörungen entstehen, die hinsichtlich einer elektromagnetischen Verträglichkeit (EMV) des gesamten Umrichters störend sein können.

Die Druckschrift US 2010/0019737 A1 offenbart einen DC/DC-Umrichter, wobei die Eingangsspannung und die Ausgangsspannung auf ein gemeinsames Potential bezogen sind. Eingangsseitig und ausgangsseitig des DC/DC-Umrichters sind Schmelzsicherungen vorgesehen, um bei einem zu hohen Stromfluss den Schaltkreis zu unterbrechen.

Die Druckschrift JP 2008 199747 offenbart ein Motorsystem mit einer Batterie, einem Inverter und einem Motor. Zwischen der Batterie und dem Inverter sind zwei Relais vorgesehen, die abhängig von einem über einem der Relais gemessenen Strom durch eine Steuereinheit geschaltet werden können.

Die Druckschrift Krstic, S. et al., "Circuit Breaker Technologies for Advanced Ship Power Systems", Electric Ship Technologies Symposium 2007, ESTS '07, IEEE, Seiten 201 bis 208 offenbart Trennschalter für Schiffsstromversorgungen.

Es ist Aufgabe der vorliegenden Erfindung, ein Verfahren und eine Vorrichtung zur Überwachung eines Umrichters zum Detektieren von Fehlerströmen zur Verfügung zu stellen, bei denen die Nachteile des Stands der Technik vermieden werden können.

### Offenbarung der Erfindung

Diese Aufgabe wird durch den Umrichter mit einer Überwachung hinsichtlich eines Fehlerstroms gemäß Anspruch 1 sowie durch das Verfahren zum Überwachen eines Umrichters gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist ein Umrichter, insbesondere ein DC/DC-Umrichter zur Verwendung in einem Kraftfahrzeug, vorgesehen. Der Umrichter umfasst:
- eine Wandlerschaltung, die zwischen einem ersten Netz und einem zweiten Netz angeordnet ist, um eine eingangsseitige Gleich- oder Wechselspannung an einem Eingangsanschluss in eine ausgangsseitige Gleich- oder Wechselspannung an einem Ausgangsanschluss zu wandeln, wobei die eingangsseitige Gleich- oder Wechselspannung und die ausgangsseitige Gleich- oder Wechselspannung auf ein gemeinsames Potential bezogen sind;
- eine erste Überwachungsschaltung, die zwischen dem Eingangsanschluss und der Wandlerschaltung angeordnet ist, um einen Stromfluss in die Wandlerschaltung zu detektieren;
- eine zweite Überwachungsschaltung, die zwischen dem Ausgangsanschluss und der Wandlerschaltung angeordnet ist, um einen Stromfluss in die Wandlerschaltung zu detektieren;
- ein erstes Trennelement, das zwischen dem Eingangsanschluss und der Wandlerschaltung angeordnet ist, um abhängig von dem durch die erste Überwachungsschaltung detektierten Stromfluss eine Verbindung zwischen dem Eingangsanschluss und der Wandlerschaltung zu schalten, und/oder ein zweites Trennelement, das zwischen dem Ausgangsanschluss und der Wandlerschaltung angeordnet ist, um abhängig von dem durch die zweite Überwachungsschaltung detektierten Stromfluss eine Verbindung zwischen dem Ausgangsanschluss und der Wandlerschaltung zu schalten, wobei ein Aktivieren des Umrichters durch Schließen der Trennelemente durchführbar ist;
- eine Steuereinheit, die ausgebildet ist, um abhängig von einem in der ersten und/oder der zweiten Überwachungsschaltung detektierten Stromfluss ein Aktivieren des Umrichters zu unterbinden.

Eine Idee der vorliegenden Erfindung besteht darin, einen Umrichter, bei dem zwei über den Umrichter miteinander verbundene Netze ein gemeinsames Potential aufweisen, auf Fehlerströme zu überwachen, indem Strommessungen von Strömen durch den Eingangsanschluss und den Ausgangsanschluss, die von dem gemeinsamen Potential verschieden sind, vorgenommen werden. Wenn bei einem deaktivierten Umrichter ein Stromfluss oberhalb eines vorgegebenen Schwellenwerts detektiert wird, so wird ein Fehlerstrom durch den Umrichter erkannt.

Weiterhin sind Trenneinrichtungen zwischen dem Eingangsanschluss und der Wandlerschaltung sowie zwischen dem Ausgangsanschluss und der Wandlerschaltung vorgesehen, um den Umrichter bei Feststellen eines Fehlerstroms in einen sicheren Betriebszustand zu versetzen und insbesondere ein Aktivieren des Umrichters zu unterbinden. Dadurch ist es möglich, die Wandlerschaltung des Umrichters unmittelbar mit dem gemeinsamen Potential zu verbinden, ohne dass zwischen dem Umrichter und dem gemeinsamen Potential ein Überwachungs- oder Trennelement vorgesehen werden muss. Dadurch kann der Widerstand zwischen Umrichter und gemeinsamem Potential vermindert werden, wodurch Gleichtaktstörungen reduziert werden können und die elektromagnetische Verträglichkeit verbessert werden kann. Zudem ist es möglich, durch Vorsehen der Messeinrichtungen in jedem der Netze Fehlerströme in Zuordnung zu dem jeweiligen Netz zu erfassen.

Gemäß einer weiteren Ausführungsform können die erste Überwachungsschaltung und das erste Trennelement parallel zueinander geschaltet sein und/oder die zweite Überwachungsschaltung und das zweite Trennelement parallel zueinander geschaltet sein.

Das gemeinsame Potential kann auf einer gemeinsamen Potentialleitung anliegen, mit der die Wandlerschaltung unmittelbar, d.h. ohne Zwischenschalten von elektronischen Bauelementen, verbunden ist.

Es kann vorgesehen sein, dass die Wandlerschaltung eine oder mehrere Halbbrücken umfasst, die zwischen der ersten Überwachungsschaltung und dem gemeinsamen Potential geschaltet sind

Weiterhin kann das gemeinsame Potential auf einer gemeinsamen Potentialleitung anliegen, mit der die Wandlerschaltung über einen Messwiderstand verbunden ist.

Gemäß einer Ausführungsform können das erste und/oder zweite Trennelement, insbesondere mit einer parallelen externen oder integrierten Diode ausgebildet sein, um einen Stromfluss aus dem dem Trennelement zugeordneten Netz in die Wandlerschaltung, insbesondere unabhängig von dem Schaltzustand des betreffenden Trennelement, zu ermöglichen oder zu verhindern.

Gemäß einem weiteren Aspekt ist ein Verfahren zum Betreiben des obigen Umrichters vorgesehen, wobei abhängig von einem in der ersten und/oder der zweiten Überwachungsschaltung detektierten Stromfluss ein Ansteuern des ersten und/oder des zweiten Trennelements zum Schließen des jeweiligen Trennelements und/oder der Schaltelemente der Halbbrücken unterbunden wird.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: ein Schaltungsdiagramm mit einem Umrichter sowie an den Netzpotentialleitungen für zwei verschiedene Netze ange-ordneten Detektions- und Trennschaltungen; und
- Figur 2: ein in der Steuereinheit ausgeführtes Verfahren zur Überwachung des Umrichters auf Fehlerströme.

### Beschreibung von Ausführungsformen

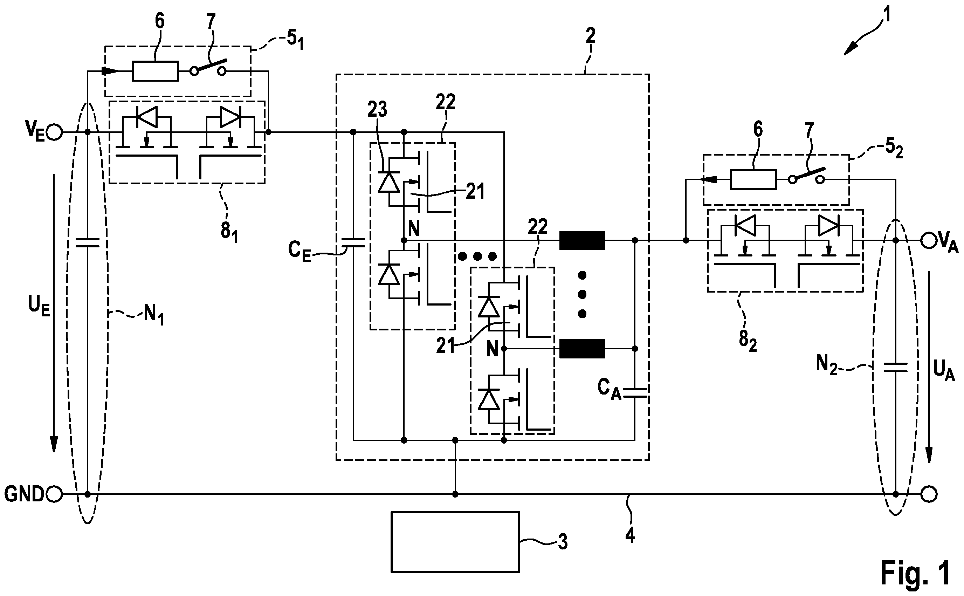

Figur 1 zeigt ein Schaltungsdiagramm eines Umrichters 1 mit einer Überwachung auf Fehlerströme. Der Umrichter 1 umfasst eine Wandlerschaltung 2, die zwischen einem ersten Netz N1 und einem zweiten Netz N2 angeordnet ist. Die Netze N1, N2 können Gleich- und/oder Wechselspannungsnetzen entsprechen und somit eine DC/DC-, AC/DC-, AC/DC- und AC/AC-Wandlung vornehmen, je nach Ansteuerung der Wandlerschaltung 2.

Im vorliegend beschriebenen Ausführungsbeispiel ist die Überwachung eines Umrichters 1 anhand eines DC/DC-Umrichters beschrieben.

Die Wandlerschaltung 2 umfasst mehrere Halbleiterschalter 21, die beispielsweise in Form von Thyristoren, IGBTs, IGCTs oder Leistungs-MOSFETs ausgebildet sein können. Jeder der Halbleiterschalter 21 ist mit einer dazu parallel geschalteten Freilaufdiode 23 versehen, um einen Freilaufstrom, der durch eine über die Halbleiterschalter 21 anliegende negative Spannung bewirkt wird, zu leiten. Eine solche negative Spannung kann bei Betreiben bzw. Schalten von induktiven Lasten entstehen. Die Freilaufdioden 23 können auch wie bei MOSFET, physikalisch bedingt, im entsprechend zugeordneten Halbleiterschalter 21 enthalten sein.

Die Halbleiterschalter 21 sind zu Halbbrücken 22 verschaltet, die von einer geeigneten Steuereinheit 3 in geeigneter Weise angesteuert werden, um eine Wandlung einer Eingangsspannung U_{E} in eine Ausgangsspannung U_{A} zu erreichen. Die Ansteuerung der Halbleiterschalter 21 erfolgt in der Regel so, dass diese entweder gesperrt oder vollständig geöffnet werden.

Um die Wandlerleistung zu erhöhen, kann die Anzahl der zueinander parallel geschalteten Halbbrücken 22 beliebig gewählt werden. Die Halbbrücken 22 sind sowohl eingangsseitig als auch ausgangsseitig parallel geschaltet. Die Halbbrücken 22 können insbesondere zueinander versetzt angesteuert werden, um eine bessere Glättung des Eingangsstroms bzw. der Ausgangsspannung zu erreichen.

Die Wandlerschaltung 2 ist eingangsseitig und ausgangsseitig mit einer Eingangskapazität bzw. einer Ausgangskapazität C_{E}, C_{A} versehen, die zwischen den Potentialanschlüssen für die Eingangsspannung U_{E} und für die Ausgangsspannung U_{A} geschaltet sind. Das Vorsehen der Eingangskapazität und Ausgangskapazität C_{E}, C_{A} dient dazu, eine Störung der Netze N1, N2 durch Oberwellen, die durch das Schalten der Halbleiterschalter 21 hervorgerufen werden, zu vermeiden. Weitere Kondensatoren können zur Verbesserung des Schaltverhaltens der Halbleiterschalter direkt an den verteilten Phasen-Halbbrücken vorhanden sein.

Der Energiefluss durch die Wandlerschaltung 2 kann unidirektional oder bidirektional vorgesehen sein, je nach Ansteuerung der Halbleiterschalter 21 durch die Steuereinheit 3. So kann ein Leistungsfluss in der in Figur 1 dargestellten Wandlerschaltung auch von der Ausgangsseite zur Eingangsseite erfolgen.

Eingangsseitig wird an der Wandlerschaltung 2 die Eingangsspannung U_{E} zwischen einem Eingangspotential V_{E} und einem Massepotential GND bereitgestellt. Ausgangsseitig liefert die Wandlerschaltung 2 die Ausgangsspannung U_{A} zwischen einem Ausgangspotential V_{A} und dem Massepotential GND. Das Massepotential GND dient als gemeinsames Potential, bezüglich dem die Eingangsspannung U_{E} und die Ausgangsspannung U_{A} bereitgestellt ist. Das Massepotential GND wird auf einer gemeinsamen Potentialleitung 4 bereitgestellt, mit der die Wandlerschaltung 2 unmittelbar verbunden ist.

Jede der Halbbrücken 22 der Wandlerschaltung 2 ist zwischen dem Eingangspotential V_{E} und dem Massepotential GND angeordnet, während jeweilige Knoten N₁ - Nₙ zwischen den zwei Halbleiterschaltern 21, die jede Halbbrücke 22 bilden, über Wandlerinduktivitäten L₁ bis Lₙ miteinander verbunden sind, um gemeinsam das Ausgangspotential V_{A} zu bilden. Insbesondere ist vorgesehen, dass die Halbbrückenschaltungen 22 ohne Zwischenschalten weiterer Bauelemente unmittelbar mit dem Eingangspotential V_{E} und dem Massepotential GND als gemeinsames Potential in Verbindung stehen. entweder direkt oder über einen niederohmigen Shunt zur Strommessung mit dem Massepotential GND verbunden sind.

Seitens des Wandlereingangs ist das erste Netz N1 über eine erste Überwachungsschaltung 5₁ mit dem Eingangspotential V_{E} verbunden. Das heißt, die Überwachungsschaltung 5₁ ist seriell in den eingangsseitigen Strompfad geschaltet. Analog ist eine zweite Überwachungsschaltung 5₂ vorgesehen, die seriell in den Ausgangsstrompfad zwischen der Wandlerschaltung 2 und dem zweiten Netz N2 geschaltet ist.

Jede der Überwachungsschaltungen 5₁, 5₂ weist ein Strommesselement 6 auf, um einen Stromfluss in die Wandlerschaltung 2 zu detektieren. Das Strommesselement 6 kann beispielsweise als ein Messwiderstand (Shunt) oder in sonstiger Weise ausgebildet sein, um eine Angabe über den fließenden Strom bereitzustellen. Die Auswertung des durch das Strommesselement 6 in die Wandlerschaltung 2 fließenden Stroms kann mit der Steuereinheit 3 vorgenommen werden, beispielsweise durch Digitalisieren einer aufgrund des Stromflusses durch das Strommesselement 6 bewirkten Messspannung, um eine digitalisierte Angabe des Stromflusses zu erhalten.

Um einen hohen Stromfluss durch die Überwachungsschaltungen 5₁, 5₂ zu vermeiden, kann das Strommesselement 6 in Reihe mit einem jeweiligen Schalter 7 geschaltet sein, der in deaktiviertem Zustand des Umrichters 1 geöffnet ist.

Parallel zu der Überwachungsschaltung 5₁, 5₂ sind ein erstes bzw. zweites Trennelement 8₁, 8₂ vorgesehen, die je nach Schaltzustand einen Stromfluss von oder zu der Wandlerschaltung 2 zulassen oder unterbrechen. Die Trennelemente 8₁, 8₂ können als Halbleiterbauelemente oder mit einem elektromechanischen Relais oder dergleichen ausgebildet sein. Die Sperrung des Stromflusses kann unidirektional oder bidirektional ausgebildet sein. Bei einer unidirektionalen Ausbildung des Trennelements 8₁, 8₂ kann ein Halbleiterschaltelement vorgesehen sein, das mit einer parallel geschalteten Diode versehen ist, um unabhängig von dem Schaltzustand des Halbleiterschaltelements einen Stromfluss in die Wandlerschaltung zu unterbinden. Soll die Sperrung bidirektional erfolgen, so können zwei seriell verschaltete Halbleiterschaltelemente vorgesehen sein, die jeweils mit einer parallel geschalteten Diode versehen sind, wobei die Dioden gegensätzlich gepolt sind, um einen Stromfluss in beide Stromrichtungen bei geöffneten Halbleiterschaltelementen zu verhindern.

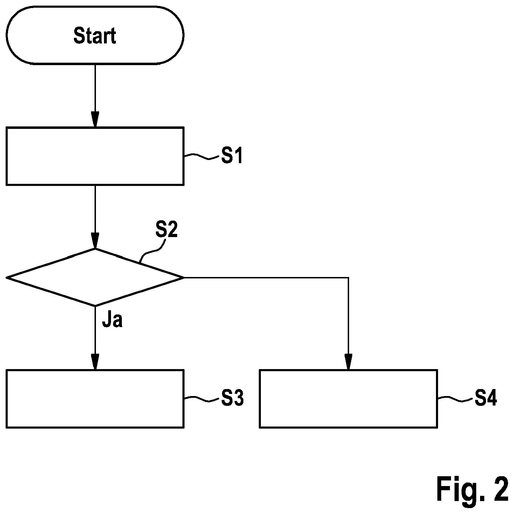

Die Steuereinheit 3 führt die Überwachung vor dem Aktivieren des Umrichters 1 durch. Das in der Steuereinheit 3 ausgeführte Verfahren wird nachfolgend anhand des Flussdiagramms der Figur 2 erläutert.

Es wird ausgegangen von einem inaktiven Zustand des Umrichters 1, in dem die Schalter 7 und die Trennelemente 8₁, 8₂ geöffnet sind. Wenn ein Aktivieren des Umrichters 1 beabsichtigt ist, wird zunächst eine Überwachung durchgeführt.

Zur Durchführung der Überwachung werden gemäß Schritt S1 bei geöffneten Trennelementen 8₁, 8₂ die Schalter 7 geschlossen und mithilfe der Strommesselemente 6 wird eine jeweilige Strommessung durch die nicht aktiv betriebene Wandlerschaltung 2 vorgenommen. Die Strommessung des Schritts S1 wird vorzugsweise unmittelbar vor dem Starten des Umrichters 1 durchgeführt. Im deaktivierten Zustand und so lange keine aktive Ansteuerung der Wandlerschaltung 2 vorgesehen ist, sollten die Schalter 7 geöffnet sein, um einen unerwünschten Stromfluss durch die deaktivierte Wandlerschaltung 2 zu vermeiden.

Enthält die Wandlerschaltung 2 defekte Kondensatoren mit einem zu niedrigen Durchlasswiderstand und/oder einen Halbleiterschalter 21 mit einem zu niedrigen Durchlasswiderstand im Sperrzustand, so wirkt sich dies durch einen entsprechend erhöhten Stromfluss durch das Strommesselement 6 mindestens einer der Überwachungsschaltungen 5₁, 5₂ von einem der Netze N1, N2 durch die Wandlerschaltung 2 zu dem gemeinsamen Massepotential GND aus. Dieser Stromfluss wird durch das Strommesselement 6 detektiert und es wird in Schritt S2 eine Abfrage durchgeführt, ob mindestens einer der detektierten Stromwerte einen vorgegebenen Schwellenwert übersteigt. Ist dies der Fall (Alternative: Ja), so wird in Schritt S3 ein Schließen der Trennelemente 8₁, 8₂ unterbunden und die Wandlerschaltung 2 in einen sicheren Fehlerzustand gebracht. Das Aktivieren des Umrichters 1 wird somit unterbunden.

Wird in Schritt S2 festgestellt, dass der Stromfluss 0 ist oder unter dem vorgegebenen Schwellenwert liegt, so wird auf eine funktionsfähige Wandlerschaltung 2 geschlossen und das Schließen der Trennelemente 8₁, 8₂ zum Aktivieren des Umrichters 1 zugelassen, um einen Strompfad von dem ersten Netz N1 zu der Wandlerschaltung 2 bzw. von dem zweiten Netz N2 zu der Wandlerschaltung 2 zuzulassen. Die Steuereinheit 3 kann dann in Schritt S4 die Wandlerschaltung 2 in geeigneter Weise betreiben, um einen Energiefluss durch den Umrichter 1 von dem ersten Netz N1 zu dem zweiten Netz N2 oder umgekehrt zu bewirken. Es kann vorgesehen sein, dass die Schalter 7 der Überwachungsschaltungen 5₁, 5₂ geschlossen bleiben, wenn in Schritt S2 festgestellt wird, dass die durch die Wandlerschaltung 2 fließenden Ströme unterhalb der vorgegebenen Fehlerschwelle liegen.

Ein erhöhter Stromfluss durch die Shunts 6 könnte allerdings auch durch einen normalen Ladestrom in die Eingangskapazität und/oder die Ausgangskapazität C_{E}, C_{A} verursacht sein, der bis zur Aufladung der Eingangskapazität bzw. der Ausgangskapazität C_{E}, C_{A} auf die Potentiale V_{E} und V_{A} fließt und keinen Fehlerzustand darstellt. Um diesen Fall von natürlichem Ladungsausgleich von einem Fehlerstrom zu unterscheiden, ist es eventuell notwendig, die Eingangskapazität und/oder die Ausgangskapazität C_{E}, C_{A} entweder durch kurzzeitiges Einschalten der Schalter 8₁ und 8₂ oder durch eine weitere parallel geschaltete Ausgleichseinrichtung auf das jeweilige Potential V_{E} bzw. V_{A} aufzuladen und damit den Ladungsausgleich zwischen dem Potential V_{E} und der Eingangskapazität C_{E} bzw. dem Potential V_{A} und der Ausgangskapazität C_{A} herzustellen. Dieser Vorgang muss eventuell mehrmals durchgeführt werden. Wird nach einer definierten Anzahl dieser Schaltvorgänge zur Aufladung der Eingangskapazität bzw. der Ausgangskapazität C_{E}, C_{A} weiterhin ein Strom an den Shunts 6 über dem definierten Grenzwert festgestellt, so liegt ein Fehlerzustand in der Wandlerschaltung 2 vor.

Der Vorteil der Anordnung der Überwachungsschaltungen 5₁, 5₂ in von dem gemeinsamen Potential verschiedenen Zuführungsleitungen, über die das Eingangspotential V_{E} bzw. das Ausgangspotential V_{A} an die Wandlerschaltung 2 bereitgestellt wird, besteht darin, dass der Widerstand zwischen der Wandlerschaltung 2 und dem Massepotential GND verringert werden kann und so Gleichtaktstörungen durch Verminderung des Widerstands zum Massepotential GND verringert werden können. Weiterhin können schwebende Potentiale in der Wandlerschaltung 2 vermieden werden, da jeder der Halbleiterschalter 21 auch im deaktivierten Zustand ein definiertes Potential aufweist.

## Patentansprüche

1. Umrichter (1), insbesondere DC/DC-Umrichter zur Verwendung in einem Kraftfahrzeug, umfassend:
- eine Wandlerschaltung (2), die zwischen einem ersten Netz (N₁) und einem zweiten Netz (N₂) angeordnet ist, um eine eingangsseitige Gleich- oder Wechselspannung (U_{E}) an einem Eingangsanschluss in eine ausgangsseitige Gleich- oder Wechselspannung (U_{A}) an einem Ausgangsanschluss zu wandeln, wobei die eingangsseitige Gleich- oder Wechselspannung und die ausgangsseitige Gleich- oder Wechselspannung auf ein gemeinsames Potential (GND) bezogen sind;
- eine erste Überwachungsschaltung (5₁), die zwischen dem Eingangsanschluss und der Wandlerschaltung (2) angeordnet ist, um einen Stromfluss in die Wandlerschaltung (2) zu detektieren;
- eine zweite Überwachungsschaltung (5₂), die zwischen dem Ausgangsanschluss und der Wandlerschaltung (2) angeordnet ist, um einen Stromfluss in die Wandlerschaltung (2) zu detektieren;
- ein erstes Trennelement (8₁), das zwischen dem Eingangsanschluss und der Wandlerschaltung (2) angeordnet ist, um abhängig von dem durch die erste Überwachungsschaltung (5₁) detektierten Stromfluss eine Verbindung zwischen dem Eingangsanschluss und der Wandlerschaltung (2) zu schalten, und/oder ein zweites Trennelement (8₂), das zwischen dem Ausgangsanschluss und der Wandlerschaltung (2) angeordnet ist, um abhängig von dem durch die zweite Überwachungsschaltung (5₂) detektierten Stromfluss eine Verbindung zwischen dem Ausgangsanschluss und der Wandlerschaltung (2) zu schalten,
**dadurch gekennzeichnet, dass**
ein Aktivieren des Umrichters durch Schließen der Trennelemente durchführbar ist, und
dass eine Steuereinheit (3) vorgesehen ist, die ausgebildet ist, um abhängig von einem in der ersten und/oder der zweiten Überwachungsschaltung (5₁, 5₂) detektierten Stromfluss ein Aktivieren des Umrichters (1) zu unterbinden.

2. Umrichter (1) nach Anspruch 1, wobei die erste Überwachungsschaltung (5₁) und das erste Trennelement (8₁) parallel zueinander geschaltet sind und/oder die zweite Überwachungsschaltung (5₂) und das zweite Trennelement (8₂) parallel zueinander geschaltet sind.

3. Umrichter (1) nach einem der Ansprüche 1 bis 2, wobei das gemeinsame Potential auf einer gemeinsamen Potentialleitung anliegt, mit der die Wandlerschaltung (2) unmittelbar verbunden ist.

4. Umrichter (1) nach einem der Ansprüche 1 bis 2, wobei das gemeinsame Potential (GND) auf einer gemeinsamen Potentialleitung (4) anliegt, mit der die Wandlerschaltung (2) über einen Messwiderstand verbunden ist.

5. Umrichter (1) nach einem der Ansprüche 1 bis 4, wobei die Wandlerschaltung (2) eine oder mehrere Halbbrücken (22) umfasst, die zwischen der ersten Überwachungsschaltung (5₁) und dem gemeinsamen Potential (GND) geschaltet sind.

6. Umrichter (1) nach einem der Ansprüche 1 bis 5, wobei das erste und/oder zweite Trennelement (8₁, 8₂), insbesondere mit einer parallel geschalteten Diode, ausgebildet sind, um einen Stromfluss aus dem dem betreffenden Trennelement (8₁, 8₂) zugeordneten Netz in die Wandlerschaltung (2) unabhängig vom Schaltzustand des betreffenden Trennelements (8₁, 8₂) zu ermöglichen oder zu unterbinden.

7. Verfahren zum Betreiben eines Umrichters (1) nach einem der Ansprüche 1 bis 4, wobei ein Aktivieren des Umrichters durch Schließen des ersten bzw. zweiten Trennelements durchführbar ist, und wobei abhängig von einem in der ersten und/oder der zweiten Überwachungsschaltung (5₁, 5₂) detektierten Stromfluss ein Ansteuern des ersten und/oder des zweiten Trennelements (8₁, 8₂) zum Schließen des jeweiligen Trennelements (8₁, 8₂) und/oder der Schaltelemente der Halbbrücken unterbunden wird.

## Claims

1. Converter (1), in particular DC/DC converter, for use in a motor vehicle, comprising:
- a transducer circuit (2), which is arranged between a first grid (N₁) and a second grid (N₂), in order to transform an input-side DC or AC voltage (U_{E}) at an input terminal to an output-side DC or AC voltage (U_{A}) at an output terminal, wherein the input-side DC or AC voltage and the output-side DC or AC voltage are referred to a common potential (GND);
- a first monitoring circuit (5₁), which is arranged between the input terminal and the transducer circuit (2), in order to detect a flow of current into the transducer circuit (2);
- a second monitoring circuit (5₂), which is arranged between the output terminal and the transducer circuit (2), in order to detect a flow of current into the transducer circuit (2);
- a first disconnection element (8₁), which is arranged between the input terminal and the transducer circuit (2), in order to switch a connection between the input terminal and the transducer circuit (2) depending on the flow of current detected by the first monitoring circuit (5₁) and/or a second disconnection element (8₂), which is arranged between the output terminal and the transducer circuit (2), in order to switch a connection between the output terminal and the transducer circuit (2) depending on the flow of current detected by the second monitoring circuit (5₂),
**characterized in that**
it is possible to activate the converter by closing the disconnection elements, and
**in that** a control unit (3) is provided, which is configured to prevent activation of the converter (1) depending on a flow of current detected in the first and/or the second monitoring circuit (5₁, 5₂).

2. Converter (1) according to Claim 1, wherein the first monitoring circuit (5₁) and the first disconnection element (8₁) are connected in parallel with one another and/or the second monitoring circuit (5₂) and the second disconnection element (8₂) are connected in parallel with one another.

3. Converter (1) according to either of Claims 1 and 2, wherein the common potential is present on a common potential line to which the transducer circuit (2) is directly connected.

4. Converter (1) according to either of Claims 1 and 2, wherein the common potential (GND) is present on a common potential line (4) to which the transducer circuit (2) is connected via a measurement resistor.

5. Converter (1) according to one of Claims 1 to 4, wherein the transducer circuit (2) comprises one or more half-bridges (22), which are connected between the first monitoring circuit (5₁) and the common potential (GND) .

6. Converter (1) according to one of Claims 1 to 5, wherein the first and/or the second disconnection element (8₁, 8₂) having, in particular, a parallel-connected diode, are configured to enable or to prevent a flow of current from the grid associated with the relevant disconnection element (8₁, 8₂) into the transducer circuit (2) independently of the switching state of the relevant disconnection element (8₁, 8₂).

7. Method for operating a converter (1) according to one of Claims 1 to 4, wherein the converter can be activated by closing the first and second disconnection element, respectively, and wherein actuation of the first and/or of the second disconnection element (8₁, 8₂) for closing the respective disconnection element (8₁, 8₂) and/or the switching elements of the half-bridges is prevented depending on a flow of current detected in the first and/or the second monitoring circuit (5₁, 5₂).

## Revendications

1. Convertisseur statique (1), notamment convertisseur statique CC/CC destiné à être utilisé dans un véhicule automobile, comprenant :
- un circuit convertisseur (2) qui est disposé entre un premier réseau (N₁) et un deuxième réseau (N₂) afin de convertir une tension continue ou alternative (U_{E}) côté entrée au niveau d'une borne d'entrée en une tension continue ou alternative (U_{A}) côté sortie au niveau d'une borne de sortie, la tension continue ou alternative côté entrée et la tension continue ou alternative côté sortie étant référencées à un potentiel commun (GND) ;
- un premier circuit de surveillance (5₁) qui est disposé entre la borne d'entrée et le circuit convertisseur (2) pour détecter un flux de courant dans le circuit convertisseur (2) ;
- un deuxième circuit de surveillance (5₂) qui est disposé entre la borne de sortie et le circuit convertisseur (2) pour détecter un flux de courant dans le circuit convertisseur (2) ;
- un premier élément interrupteur (8₁) qui est disposé entre la borne d'entrée et le circuit convertisseur (2) pour commuter une liaison entre la borne d'entrée et le circuit convertisseur (2) en fonction du flux de courant détecté par le premier circuit de surveillance (5₁), et/ou un deuxième élément interrupteur (8₂) qui est disposé entre la borne de sortie et le circuit convertisseur (2) pour commuter une liaison entre la borne de sortie et le circuit convertisseur (2) en fonction du flux de courant détecté par le deuxième circuit de surveillance (5₂),
**caractérisé en ce que**
l'activation du convertisseur peut être effectuée en fermant les éléments interrupteurs, et
**en ce qu'**une unité de commande (3) est présente, laquelle est configurée pour inhiber une activation du convertisseur statique (1) en fonction d'un flux de courant détecté dans le premier et/ou le deuxième circuit de surveillance (5₁, 5₂).

2. Convertisseur statique (1) selon la revendication 1, le premier circuit de surveillance (5₁) et le premier élément interrupteur (8₁) étant branchés en parallèle l'un de l'autre et/ou le deuxième circuit de surveillance (5₂) et le deuxième élément interrupteur (8₂) étant branchés en parallèle l'un de l'autre.

3. Convertisseur statique (1) selon l'une des revendications 1 à 2, le potentiel commun étant appliqué sur une ligne de potentiel commune à laquelle le circuit convertisseur (2) est relié directement.

4. Convertisseur statique (1) selon l'une des revendications 1 à 2, le potentiel commun (GND) étant appliqué sur une ligne de potentiel commune (4) à laquelle le circuit convertisseur (2) est relié par le biais d'une résistance de mesure.

5. Convertisseur statique (1) selon l'une des revendications 1 à 4, le circuit convertisseur (2) comportant un ou plusieurs demi-ponts (22) qui sont branchés entre le premier circuit de surveillance (5₁) et le potentiel commun (GND).

6. Convertisseur statique (1) selon l'une des revendications 1 à 5, le premier et/ou le deuxième élément interrupteur (8₁, 8₂) étant notamment formés avec une diode branchée en parallèle afin de permettre ou d'inhiber un flux de courant depuis le réseau associé à l'élément interrupteur (8₁, 8₂) concerné dans le circuit convertisseur (2) indépendamment de l'état de commutation de l'élément interrupteur (8₁, 8₂) concerné.

7. Procédé pour faire fonctionner un convertisseur statique (1) selon l'une des revendications 1 à 4, l'activation du convertisseur statique pouvant être effectuée en fermant le premier ou le deuxième élément interrupteur, et une excitation du premier et/ou du deuxième élément interrupteur (8₁, 8₂) en vue de fermer l'élément interrupteur (8₁, 8₂) respectif et/ou les éléments de commutation des demi-ponts étant inhibée en fonction d'un flux de courant détecté dans le premier et/ou le deuxième circuit de surveillance (5₁, 5₂).
